# EUROPÄISCHE PATENTANMELDUNG

(11) **EP 2 289 294 A2**
(43) Veröffentlichungstag der Anmeldung: **02.03.2011**
(21) Anmeldenummer: 10401123.4
(22) Anmeldetag: 22.07.2010
(51) Int. Cl.: A01B 29/04

(54) **Bodenwalze**

(30) Priorität: 10.08.2009 DE 102009026351
(71) Anmelder: Amazonen-Werke H. Dreyer GmbH & Co. KG, 49205 Hasbergen (DE)
(72) Erfinder: Randasch, Holger, 04229 Leipzig (DE)

(57) **Zusammenfassung**

Bodenwalze mit einem Tragrahmen (1), an dem auf einem drehbar gelagerten Tragrohr (2) mehrere beabstandet zueinander angeordnete ring- und/oder scheibenförmige Walzenelemente (3) angeordnet sind, und den Walzenelementen (3) zugeordneten und in Zwischenräume (4) zwischen den Walzenelemente eingreifenden und am vom Tragrahmen (1) getragenen Tragarmen (5) befestigten Bodenbearbeitungswerkzeugen (6). Um eine verstopfungsfreie Arbeit der Bodenwalze mit in die Zwischenräume (4) zwischen den Walzenelementen (3) eingreifenden Bodenbearbeitungswerkzeugen (6) zu schaffen, ist vorgesehen, dass die Bodenbearbeitungswerkzeuge als drehbar an den Tragarmen (5) angeordnete scheibensechartige Elemente (6) ausgebildet sind.

## Beschreibung

### [Beschreibung]

Die Erfindung betrifft eine Bodenwalze gemäß des Oberbegriffes des Patentanspruches 1.

Eine derartige Bodenwalze ist beispielsweise durch die EP 07 61 078 B1. Bei dieser Bodenwalze greifen in den Zwischenräumen zwischen den Walzenelementen als messerartige Zinken ausgebildete Bodenbearbeitungswerkzeuge ein. Mittels dieser messerartigen Zinken soll eine Schollenzerkleinerung und Planierung erreicht werden. Insbesondere jedoch auf mit Pflanzenresten durchsetzten Böden, besonders unter feuchten und nassen Verhältnissen, neigen die messerartigen Zinken zum Verstopfen.

Der Erfindung liegt die Aufgabe zugrunde, eine verstopfungsfreie Arbeit der Bodenwalze mit in die Zwischenräume zwischen den Walzenelementen eingreifenden Bodenbearbeitungswerkzeugen zu schaffen.

Diese Aufgabe wird erfindungsgemäß dadurch gelöst, dass die Bodenbearbeitungswerkzeuge als drehbar an den Tragarmen angeordnete scheibensechartige Elemente ausgebildet sind. Infolge dieser Maßnahmen werden durch die scheibensechartigen Elemente die Schollen zerkleinert. Durch die drehbar angeordneten scheibensechartigen Elemente wird erreicht, dass die sich auf oder sich im Boden befindliche Pflanzenreste zerschnitten werden und sicher aus den Zwischenräumen der Walzenelemente heraus geschoben und durch diese hindurchgefördert werden, so dass ein Verstopfen der Bodenwalze auch unter schwierigen Bedingungen vermieden wird.

Die scheibensechartigen Elemente sind in bevorzugter Weise als glatte oder gezahnte Scheibenseche ausgebildet. Versuche haben gezeigt, dass es vorteilhaft ist, dass die Drehachsen der Scheibenseche quer zur Fahrtrichtung ausgerichtet sind oder einen leichten Anstellwinkel zur Querachse aufweisen. Hierbei können die Drehachsen aller Scheibenseche zumindest annähernd miteinander fluchtend ausgestaltet sein. In einer Ausführung ist vorgesehen, dass die Scheibenseche als Hohlscheiben ausgebildet sind. Hierdurch wird eine besonders stabile Ausgestaltung der Scheibenseche erreicht.

Eine vorteilhafte und kompakte Anordnung der Scheibenseche in den Zwischenräumen der Walzenelemente bei einer guten Arbeitsweise der Scheibenseche lässt sich dadurch erreichen, dass die Scheibenseche einen Durchmesser aufweisen, der zumindest annähernd dem halben Durchmesser der scheibenförmigen Walzenelemente entspricht.

Um in einfacher Weise eine Klemm- und Bruchsicherung verwirklichen zu können, ist vorgesehen, dass die Tragarme gegen Federkraft verschwenkbar am Tragrahmen angeordnet sind. Eine einfache Befestigung der Tragarme für die Scheibenseche lässt sich dadurch erreichen, dass die Tragarme an einem Querbalken befestigt sind, dass der Querbalken über Tragstreben mittels einer Gummilagerung am Tragrahmen verschwenkbar befestigt ist. Eine vorteilhafte Anordnung ergibt sich dadurch, dass die den Querbalken und die Tragarme tragenden Querstreben beabstandet zu der Drehachse der Walzenelemente und oberhalb dieser Drehachse am Tragrahmen angelenkt sind.

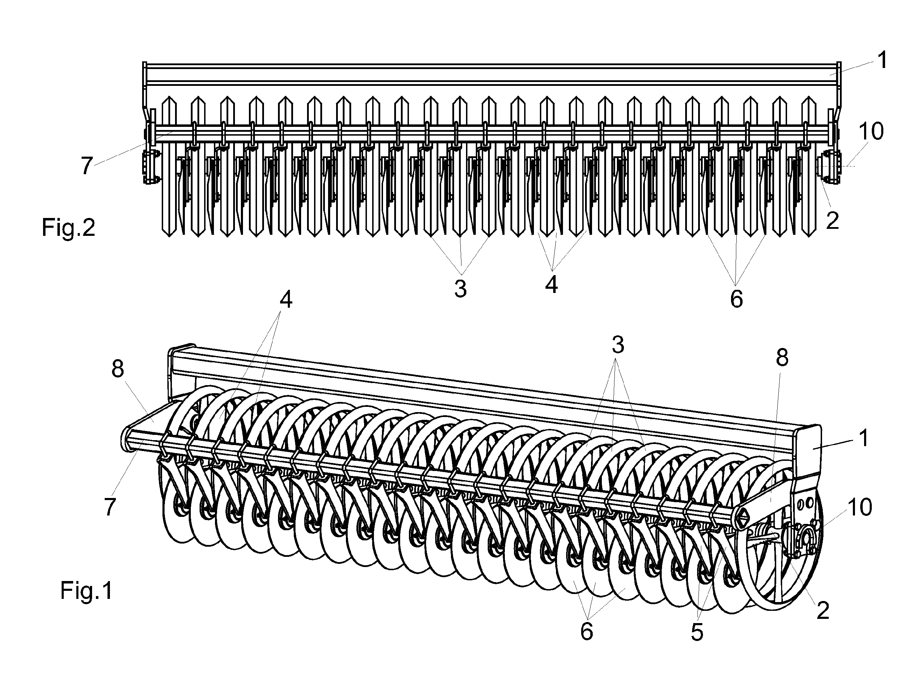

Weitere Einzelheiten der Erfindung sind der Beispielsbeschreibung und den Zeichnungen zu entnehmen. Hierbei zeigen
- Fig. 1: die erfindungsgemäße Bodenwalze in perspektivischer Darstellung,

- Fig. 2: die Bodenwalze in der Vorderansicht,
- Fig. 3: die Bodenwalze in Arbeitsstellung,
- Fig. 4: die Bodenwalze in ausgehobenem Zustand.

Die Bodenwalze ist Bestandteil einer

Bodenbearbeitungskombination oder kann auch als Sologerät eingesetzt werden. Die Bodenwalze weist den Tragrahmen 1 auf, an dem auf dem drehbar gelagerten Tragrohr 2 mehrere beabstandet zueinander angeordnete ring- oder scheibenförmige Walzenelemente 3 in bekannter Weise angeordnet sind. In den Zwischenräumen 4 zwischen den Walzenelementen 3 greifen als drehbar an Tragarmen 5 angeordnete scheibensechartige Elemente 6 ein. Diese scheibensechartigen Elemente 6 sind als glatte oder gezahnte Scheibenseche ausgebildet und mittels Lagerelementen frei drehbar an jeweils einem Tragarm 5 gelagert. Die Tragarme 5 sind an einem Querbalken 7 befestigt. An dem Querbalken 7 sind nach hinten ragende Tragstreben 8 an beiden Außenseiten des Querbalkens 7 befestigt. Das dem Querbalken 7 abgewandete Ende der jeweiligen Tragstrebe 8 ist mittels einer sog. Gummilagerung 9 am Tragrahmen 1 in verschwenkbarer Weise befestigt. Die Gummilagerung 9 wirkt gleichzeitig als Federung, so dass die Scheibenseche 6 über den Querbalken 7 federnd am Tragrahmen 1, d.h. gegen Federkraft ausweichbar am Tragrahmen 1 verschwenkbar angeordnet sind.

Die Scheibenseche 6 sind als Hohlscheiben ausgebildet. Die Drehachsen der Scheibenseche 6 sind quer zur Fahrtrichtung ausgerichtet oder können auch einen leichten Anstellwinkel zur Querachse aufweisen. In vorteilhafter Weise fluchten die Drehachsen aller Scheibenseche 6 zumindest annähernd miteinander.

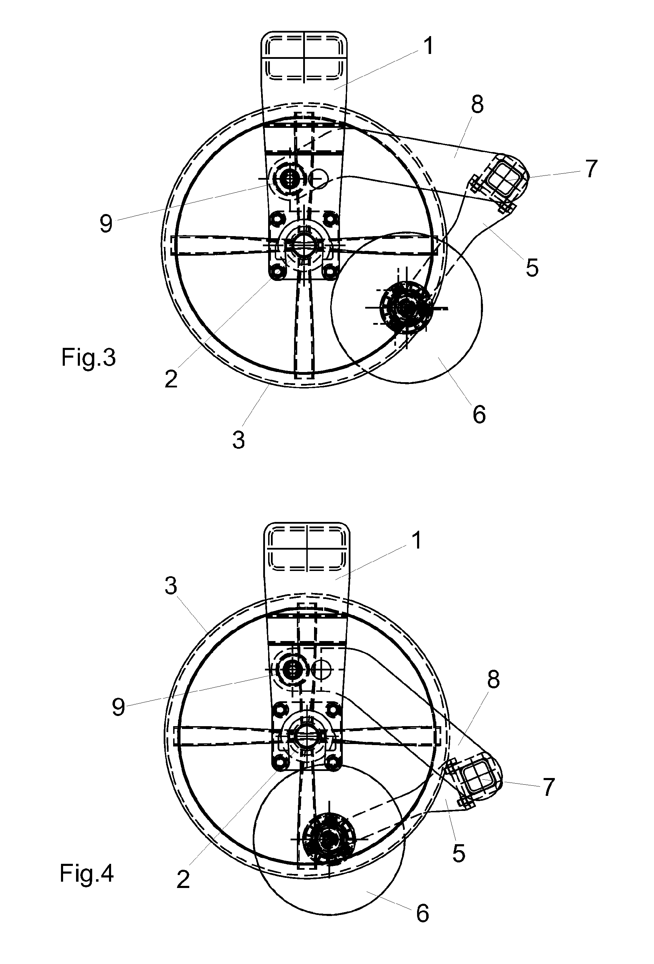

Die Scheibenseche 6 weisen einen Durchmesser auf, der zumindest annähernd dem halben Durchmesser der scheibenförmigen Walzenelemente 3 entspricht, wie insbesondere in den Fig. 3 und 4 zu entnehmen ist. Die an dem Querbalken 7 und die Tragarme 5 tragenden Querstreben 8 sind beabstandet zu der Drehachse 10 der Walzenelemente 3 und oberhalb dieser Drehachse 10 am Tragrahmen 1 angelenkt, wie die Fig. 3 und 4 zeigen.

Im Vergleich zu den Fig. 3 und 4 ist erkennbar, dass über die Gummilagerung 9, mit denen die Tragarme 8 an dem Tragrahmen 1 angeordnet sind, die Scheibenseche 6 gegen Federkraft nach oben ausweichen können. Wenn die Maschine gemäß Fig. 4 ausgehoben ist, werden die Tragarme 8 mit dem Querbalken 7 und den Scheibensechen 6 aufgrund der Federung der Gummilagerung 9 nach unten gedrückt. Beim Einsatz der Maschine werden aufgrund des Bodenwiderstandes die Scheibenseche 6 gegen die Federkraft der Gummilagerung 9 in die in Fig. 3 dargestellte Position gedrückt.

## Patentansprüche

1. Bodenwalze mit einem Tragrahmen, an dem auf einem drehbar gelagerten Tragrohr mehrere beabstandet zueinander angeordnete ring- und/oder scheibenförmige Walzenelemente angeordnet sind, und den Walzenelementen zugeordneten und in Zwischenräume zwischen den Walzenelemente eingreifenden und am vom Tragrahmen getragenen Tragarmen befestigten Bodenbearbeitungswerkzeugen, **dadurch gekennzeichnet, dass** die Bodenbearbeitungswerkzeuge als drehbar an den Tragarmen (5) angeordnete scheibensechartige Elemente (6) ausgebildet sind.

2. Bodenwalze nach Anspruch 1, **dadurch gekennzeichnet, dass** die scheibensechartigen Elemente (6) als Scheibenseche ausgebildet sind.

3. Bodenwalze nach einem oder mehreren der vorstehenden Ansprüche, **dadurch gekennzeichnet, dass** die Drehachsen der Scheibenseche (6) quer zur Fahrtrichtung ausgerichtet sind oder einen leichten Anstellwinkel zur Querachse aufweisen.

4. Bodenwalze nach einem oder mehreren der vorstehenden Ansprüche, **dadurch gekennzeichnet, dass** die Drehachsen aller Scheibenseche (6) zumindest annähernd miteinander fluchten.

5. Bodenwalze nach einem oder mehreren der vorstehenden Ansprüche, **dadurch gekennzeichnet, dass** die Scheibenseche (6) als Hohlscheiben ausgebildet sind.

6. Bodenwalze nach einem oder mehreren der vorstehenden Ansprüche, **dadurch gekennzeichnet, dass** die Scheibenseche einen Durchmesser aufweisen, der zumindest annähernd dem halben Durchmesser der scheibenförmigen Walzenelemente (3) entspricht.

7. Bodenwalze nach einem oder mehreren der vorstehenden Ansprüche, **dadurch gekennzeichnet, dass** die Tragarme gegen Federkraft verschwenkbar am Tragrahmen angeordnet sind.

8. Bodenwalze nach einem oder mehreren der vorstehenden Ansprüche, **dadurch gekennzeichnet, dass** die Tragarme (5) an einem Querbalken (7) befestigt sind, dass der Querbalken (7) über Tragstreben (8) mittels einer Gummilagerung (9) am Tragrahmen (1) verschwenkbar befestigt ist.

9. Bodenwalze nach einem oder mehreren der vorstehenden Ansprüche, **dadurch gekennzeichnet, dass** die den Querbalken (7) und die Tragarme(5) tragenden Querstreben (8) beabstandet zu der Drehachse der Walzenelemente (10) und oberhalb dieser Drehachse (10) am Tragrahmen (1) angelenkt sind.
